(19) **Europäisches Patentamt European Patent Office Office européen des brevets**

(11) **EP 4 571 560 A1**

(12) **DEMANDE DE BREVET EUROPEEN**

(43) Date de publication:
**18.06.2025 Bulletin 2025/25**

(21) Numéro de dépôt: **24219653.3**

(22) Date de dépôt: **13.12.2024**

(51) Classification Internationale des Brevets (IPC):
**G06F 30/10** (2020.01)     **B29B 11/14** (2006.01)
**G06F 111/10** (2020.01)     **G06F 113/10** (2020.01)

(52) Classification Coopérative des Brevets (CPC):
**G06F 30/10;** G06F 2111/10; G06F 2113/10;
G06F 2113/26

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **14.12.2023 FR 2314151**

(71) Demandeurs:
• **Commissariat à l'Energie Atomique et aux Energies Alternatives**
**75015 Paris (FR)**
• **Centre National de la Recherche Scientifique**
**75016 Paris (FR)**

(72) Inventeurs:
• **MONTIEL, Antoine**
**91191 GIF-SUR-YVETTE (FR)**
• **BONAMY, Daniel**
**91191 GIF-SUR-YVETTE (FR)**
• **DERIEUX, Thibaud**
**91191 GIF-SUR-YVETTE (FR)**
• **SCHITTECATTE, Laura**
**91191 GIF-SUR-YVETTE (FR)**
• **GEERTSEN, Valérie**
**91191 GIF-SUR-YVETTE (FR)**
• **GUENOUN, Patrick**
**91191 GIF-SUR-YVETTE (FR)**
• **NGUYEN, Thuy**
**92340 BOURG LA REINE (FR)**

(74) Mandataire: **Gevers & Orès**
**Immeuble le Palatin 2**
**3 Cours du Triangle**
**CS 80165**
**92939 Paris La Défense Cedex (FR)**

(54) **PROCÉDÉ DE FABRICATION D'UNE PIÈCE BI OU TRI-DIMENSIONNELLE PRÉSENTANT UNE ARCHITECTURE COMPOSITE AVEC AU MOINS DEUX MICRO-TREILLIS DIFFÉRENTS CONNECTÉS L UN À L AUTRE**

(57)     L'invention concerne un procédé de fabrication d'une pièce bi ou tri-dimensionnelle présentant une architecture composite avec au moins deux micro-treillis différents connectés l'un à l'autre, comprenant les étapes suivantes :
• effectuer (100) une étape de conception mise en oeuvre par ordinateur comportant les étapes suivantes :
A) définir (100A) un domaine représentant ladite pièce à fabriquer, puis définir un premier sous-domaine pour un premier micro-treillis et un deuxième sous-domaine, complémentaire au premier sous-domaine, pour délimiter un deuxième micro-treillis différent du premier micro-treillis ;
B) définir (100B), sur l'ensemble du domaine, les coordonnées de centres générateurs pour le deux micro-treillis,
C) définir (100C) le premier micro-treillis
D) définir (100D) le deuxième micro-treillis
E) connecter (100E) le deuxième micro-treillis au premier micro-treillis.

l'étape de conception prévoyant aussi de définir une forme et des dimensions transversales associées pour chaque micro-poutre, puis :
• fabriquer (200) l'architecture ainsi conçue.

[Fig. 1]

## Description

### Domaine technique de l'invention

L'invention se rapporte au domaine des matériaux présentant une architecture composite.

### Arrière-plan technique

Un matériau composite est généralement obtenu par un assemblage de deux (ou plus) matériaux individuels avec des propriétés mécaniques différentes.

Les solutions existantes sont généralement basées sur l'emploi de matériaux individuels différents. Un matériau composite peut alors amener des comportements mécaniques plus avantageux que les matériaux individuels constitutifs ne possèdent pas seuls. De manière générale, le comportement mécanique d'un matériau est défini par son module d'Young (E) et son module de Poisson (v) pour caractériser la rigidité, sa limite élastique ($\sigma_Y$) pour caractériser la dureté, et sa ténacité ($K_C$) pour caractériser la résistance à la fracture. Il est nécessaire, pour que ces quantités soient bien des constantes matériaux, que la microstructure de chacun des matériaux constitutifs soit isotrope.

Parmi les matériaux composites, on peut par exemple citer le béton armé (composite avec du béton pour assurer la résistance à la compression, et une armature en acier pour assurer la résistance à la traction), les fibres de verres noyées dans une résine (assemblage de fibres de verre pour assurer la rigidité et de résine, par exemple une résine thermoplastique comme le polyester pour assurer la résistance à la fracture) ou encore, en prenant en compte cette fois un exemple issu du milieu naturel, la nacre dont la structure brique et mortier, composée d'une phase minérale dure (brique) et d'une phase organique molle (mortier) confère une combinaison de propriétés de dureté et de ténacité inégalée. On pourra plus généralement se référer à ce qui est proposé par Clyne, D. Hull, An introduction to composite materials, 3rd édition, Cambridge University Press (2019).

Outre le choix des matériaux constitutifs individuels du matériau composite, l'organisation spatiale des différents matériaux constitutifs individuels est un élément clé pour l'optimisation des propriétés mécaniques. Ainsi et par exemple, dans le cas de la nacre, le fait que la phase minérale (dure) se présente géométriquement sous la forme de briques et que la phase organique (molle) se présente géométriquement sous la forme d'un mortier entre les briques lui confère une ténacité trois ordres de grandeur plus élevés que celle des matériaux individuels constitutifs. On pourra se référer à Song F, Soh AK, Bai YL, Structural and mechanical properties of the organic matrix layers of nacre, Biomaterials (2003), Sept. 24 (20): 3623-31; doi:10.1016/s0142-9612(03)00215-1. PMID :12809793.

Toutefois, les contraintes, à la fois environnementales, de coûts, d'accès aux matières premières ou de recyclage, peuvent limiter l'utilisation de certains matériaux et par conséquent aussi limiter les possibilités pour effectuer certains matériaux composites.

Ces mêmes contraintes incitent à effectuer une utilisation aussi parcimonieuse que possible des matières premières dans la fabrication des matériaux de structure. Enfin, une voie largement explorée pour réduire l'impact énergétique et carbone, en particulier des véhicules, est de réduire au maximum la masse volumique p (ou densité) des matériaux utilisés sans nuire à leur comportement mécanique.

La manière la plus naturelle d'alléger un matériau est d'y introduire des pores.

L'introduction de pores dans le matériau peut s'effectuer de manière aléatoire. C'est par exemple le cas des mousses solides ou des aérogels.

En variante, l'introduction de pores dans le matériau peut s'effectuer de manière contrôlée.

Ce contrôle peut notamment être obtenu au moyen d'une fabrication additive. La fabrication additive permet de moduler *in extenso* l'architecture du matériau, et donc de disposer les pores dans l'espace de manière contrôlée et, de fait, de contrôler leur impact sur les performances mécaniques.

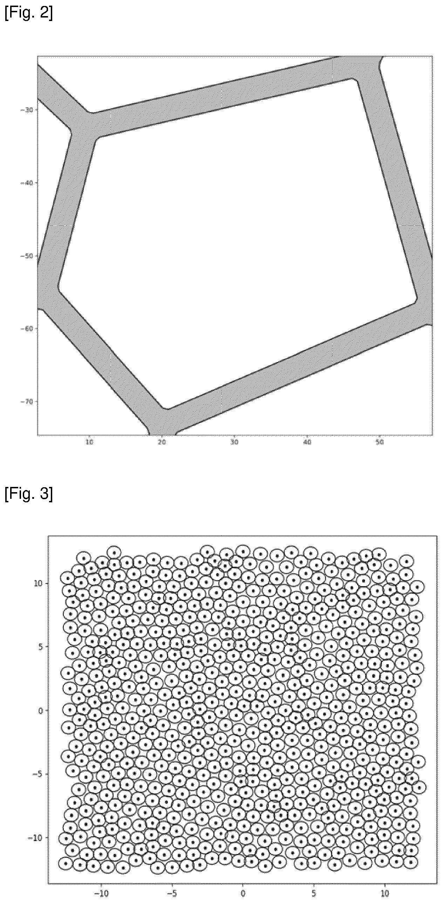

On pourra par exemple se référer à l'article de T. X. Zheng & al. : Ultrastiff Mechanical Metamaterials, Science, 3434(6105890), 9621373-965 1377 (20112014) qui propose une architecture de type micro-treillis composés de micro-poutres arrangés périodiquement. Comme on peut le constater dans cet article (figure 3A de cet article), un arrangement dit « octet-truss » amène un rapport entre la rigidité et la densité très élevé, tandis qu'un arrangement dit « Kelvin foam » aboutit à un rapport beaucoup plus faible.

Les règles à suivre pour contrôler ce rapport rigidité-densité dans un micro-treillis fait de micro-poutres arrangées périodiquement sont connues.

En effet, pour cela, il faut contrôler la connectivité dite Z, à savoir le nombre de micro-poutres par noeud.

Ainsi, en bidimensionnel (2D), si la connectivité Z est strictement inférieure à 4, la rigidité varie avec le cube de la densité et si la connectivité Z est supérieure ou égale à 6, la rigidité est sensiblement proportionnelle à la densité.

De manière analogue, en tridimensionnel (3D), si la connectivité Z est strictement inférieure à 6, la rigidité varie avec le carré de la densité et si la connectivité Z est supérieure ou égale à 12, la rigidité est sensiblement proportionnelle à la densité. Ainsi, pour un micro-treillis tridimensionnel avec une connectivité de Z = 12 (l'exemple le plus connu est le micro-treillis nommé « octet-truss » dans la littérature et selon la terminologie anglo-saxonne), la rigidité de l'architecture de densité relative 1% (par référence au matériau plein) est diminué d'un facteur variant entre 300 et 1000 par rapport à celle du matériau qui la constitue. Et pour un micro-treillis tridimensionnel avec une connectivité de Z = 4 (l'exemple le plus connu est le micro-treillis nommé « Kelvin-foam » dans la littérature et selon la terminologie anglo-saxonne), la rigidité de l'architecture de densité relative 1% la rigidité est diminuée d'un facteur 300000. On pourra retrouver ces informations dans l'article de V.S. Despandes & al. : Foam topology: bending versus stretching dominated architectures, Acta Materialia, 49(6), 1035-1040 (2001) et V.S. Despandes & al. : Effective properties of the octet-truss lattice material, Journal of the Mechanics and Physics of Solids, 49, 1747-1769.

La périodicité induit cependant un défaut majeur puisque le comportement mécanique du micro-treillis obtenu est anisotrope. Le matériau est moins rigide ou plus cassant lorsqu'on le sollicite selon certaines orientations. En raison de cette anisotropie, il n'est donc plus possible de définir le matériau par les seules constantes usuelles (module d'Young, module de Poisson, limite élastique et ténacité) utilisées pour dimensionner les structures.

Un objectif de l'invention est de proposer une pièce bi-ou tri-dimensionnelle présentant une architecture composite ultralégère aux propriétés mécaniques modulables.

En particulier, un objectif de l'invention est de proposer une telle pièce avec des propriétés mécaniques pouvant être modulées localement sur une large plage de valeurs de sorte à pouvoir, a minima, reproduire les mécanismes de renforcement, l'association de propriétés fonctionnelles et/ou les gradients de propriétés recherchés dans les matériaux composites connus.

Un autre objectif de l'invention est de proposer une telle pièce sans pour autant utiliser des matériaux individuels constitutifs différents.

A cet effet, l'invention propose un procédé de fabrication d'une pièce bi ou tri-dimensionnelle présentant une architecture composite avec au moins deux micro-treillis différents connectés l'un à l'autre, comprenant les étapes suivantes :

- effectuer une étape de conception mise en oeuvre par ordinateur comportant les étapes suivantes :

A) définir un domaine représentant la pièce bi- ou tri-dimensionnelle à fabriquer, puis définir un premier sous-domaine destiné à délimiter un premier micro-treillis ainsi qu'au moins un deuxième sous-domaine, complémentaire au premier sous-domaine, quant à lui destiné à délimiter un deuxième micro-treillis différent du premier micro-treillis ;

B) définir, sur l'ensemble du domaine, les coordonnées de centres générateurs pour le premier micro-treillis et le deuxième micro-treillis, comme suit :

B1) à partir d'un arrangement aléatoire bi ou tri-dimensionnel de billes indéformables de diamètres donnés dans l'ensemble dudit domaine, réaliser un empilement compact aléatoire desdites billes au sein dudit domaine,

B2) pour chaque bille de l'empilement compact aléatoire bi ou tri-dimensionnel dudit domaine, déterminer les coordonnées du centre de la bille, puis

B3) pour chaque bille de l'empilement compact aléatoire bi ou tri-dimensionnel dudit domaine, associer les coordonnées du centre de la bille à celles d'un centre générateur pour l'un quelconque du premier ou du deuxième micro-treillis,

C) définir le premier micro-treillis délimité par le premier sous-domaine comme suit :

C1) réaliser une triangulation de Delaunay avec les centres générateurs puis associer deux noeuds reliés par un côté de triangle à une micro-poutre,

C2) supprimer chaque micro-poutre dont aucun des deux noeuds n'appartient au premier sous-domaine,

C3) identifier et supprimer chaque micro-poutre dont l'un des deux noeuds seulement appartient au premier sous-domaine, le noeud appartenant au premier sous-domaine étant alors identifié comme noeud frontière du premier sous-domaine,

D) à partir des coordonnées des centres générateurs obtenus à l'issue de l'étape B3), définir le deuxième micro-treillis différent du premier micro-treillis et délimité par le deuxième sous-domaine, comme suit :

D1) générer un diagramme de Voronoï en utilisant les centres générateurs comme germes dudit diagramme puis, associer deux noeuds reliés par le diagramme de Voronoï à une micro-poutre,

D2) supprimer chaque micro-poutre dont aucun des deux noeuds n'appartient au deuxième sous-domaine,

D3) identifier et supprimer chaque micro-poutre dont l'un des deux noeuds seulement appartient au deuxième sous-domaine, le noeud appartenant au deuxième sous-domaine étant identifié comme noeud frontière du deuxième sous-domaine ;

E) connecter le deuxième micro-treillis au premier micro-treillis. l'étape de conception prévoyant aussi de définir une forme et des dimensions transversales associées pour chaque micro-poutre, puis : - fabriquer l'architecture ainsi conçue.

Le procédé selon l'invention pourra comprendre l'une au moins des étapes additionnelles suivantes, prises seules ou en combinaison :

-   l'étape B1) est mise en oeuvre à partir d'un arrangement aléatoire de billes de diamètres identiques ;

-   l'étape B1) est mise en oeuvre par un algorithme de Lubachevsky-Stillinger, un algorithme dit de biais de force, un algorithme dérivé de ceux-ci ou encore une succession quelconque de ces différents algorithmes ;

-   l'étape E) comprend les étapes suivantes : E1) pour chaque micro-poutre identifiée puis supprimée obtenue à l'étape C3), redéfinir le noeud frontière du premier sous-domaine au point de croisement de la micro-poutre identifiée puis supprimée avec la limite du premier sous-domaine, puis définir une nouvelle micro-poutre entre l'ancien noeud frontière et le noeud frontière ainsi redéfini ; E2) pour chaque noeud frontière du deuxième sous-domaine, chercher le noeud frontière du premier sous-domaine qui lui est le plus proche et relier ces deux noeuds par une micro-poutre ; E3) pour chaque noeud frontière du premier sous-domaine qui n'a pas été relié à l'issue de l'étape E2), chercher le noeud frontière du deuxième sous-domaine qui lui est le plus proche et relier ces deux noeuds par une micro-poutre ;

-   après l'étape E1), une étape additionnelle consistant à relier chaque noeud frontière du premier sous-domaine avec le noeud frontière le plus proche du premier sous-domaine ;

-   l'étape E) comprend les étapes suivantes : E'1) pour chaque micro-poutre obtenue identifiée puis supprimée à l'étape D3), redéfinir le noeud frontière du deuxième sous-domaine au point de croisement de la micro-poutre identifiée puis supprimée avec la limite du deuxième sous-domaine, puis définir une nouvelle micro-poutre entre l'ancien noeud frontière et le noeud frontière ains redéfini ; E'2) pour chaque noeud frontière du premier sous-domaine, chercher le noeud frontière du deuxième sous-domaine qui lui est le plus proche et relier ces deux noeuds par une micro-poutre ; E'3) pour chaque noeud frontière du deuxième sous-domaine qui n'a pas été relié à l'issue de l'étape E'2), chercher le noeud frontière du premier sous-domaine qui lui est le plus proche et relier ces deux noeuds par une micro-poutre ;

-   le procédé comprend une étape, mise en oeuvre à l'issue de l'étape de conception et consistant à réaliser un maillage de chaque micro-treillis avant de mettre en oeuvre l'étape fabrication ;

-   l'étape de fabrication est réalisée par fabrication additive.

L'invention concerne également une pièce bi ou tri-dimensionnelle présentant une architecture composite avec au moins deux micro-treillis différents connectés l'un à l'autre, le premier micro-treillis, isotrope, présentant une architecture réalisée avec des micro-poutres reliées entre elles en formant des triangles de Delaunay et le deuxième micro-treillis, également isotrope, présentant une architecture réalisée avec des micro-poutres reliées entre elles en formant des cellules de Voronoï, chaque noeud frontière du deuxième sous-domaine étant connecté à un noeud frontière du premier sous-domaine et inversement.

## Brève description des figures

D'autres objets et caractéristiques de l'invention apparaîtront plus clairement dans la description qui suit, faite en référence aux figures annexées, dans lesquelles :

La [Fig. 1] est une représentation schématique des étapes principales d'un procédé selon l'invention pour la fabrication d'une pièce bi ou tri-dimensionnelle présentant une architecture composite avec au moins deux micro-treillis différents connectés l'un à l'autre ;

La [Fig. 2] représente un domaine séparé en deux sous-domaines obtenu après la mise en oeuvre d'une première étape du procédé selon l'invention ;

La [Fig. 3] représente un empilement aléatoire compact de billes indéformables de diamètres quasi-identiques, obtenu après avoir mis en oeuvre par ordinateur une étape subséquente du procédé selon l'invention ;

La [Fig. 4] représente un nuage de noeuds obtenu après avoir mis en oeuvre par ordinateur une étape du procédé selon l'invention effectuée à partir de l'arrangement de la [Fig. 3] ;

La [Fig. 5] représente le micro-treillis obtenu dans l'ensemble du domaine après avoir mis en oeuvre par ordinateur une autre étape du procédé selon l'invention effectuée à partir du nuage de noeuds de la [Fig. 4] ;

La [Fig. 6] représente le micro-treillis obtenu après avoir mis en oeuvre par ordinateur une autre étape du procédé selon l'invention effectuée à partir du micro-treillis de la [Fig. 5] ;

La [Fig. 7] représente le micro-treillis obtenu après avoir mis en oeuvre par ordinateur une autre étape du procédé selon l'invention, au sein du deuxième sous-domaine ;

La [Fig. 8] est une vue agrandie de la [Fig. 7] au niveau d'une zone frontière entre les deux sous-domaines visibles à la [Fig. 2] ;

La [Fig. 9] représente le micro-treillis obtenu pour le premier sous-domaine après avoir mis en oeuvre par ordinateur une autre étape du procédé selon l'invention pouvant être effectuée à partir du micro-treillis de la [Fig. 6] ;

La [Fig. 10] représente le micro-treillis finalement obtenu au sein de l'ensemble du domaine montré sur la [Fig. 2] après avoir mis en oeuvre par ordinateur une étape supplémentaire du procédé selon l'invention effectuée à partir du micro-treillis de la [Fig.8] ;

La [Fig. 11] est une vue agrandie de la [Fig. 10] au niveau d'une zone frontière entre les deux sous-domaines visibles à la [Fig. 2] ;

La [Fig. 12] montre en bidimensionnel le module d'Young (E) de l'architecture composite dans son ensemble en fonction (en abscisses) de la densité du matériau, pour plusieurs valeurs de proportion relative de « zones molles » (Voronoï) par rapport aux « zones dures » (Delaunay).

La [Fig. 13] montre en bidimensionnel la modularité du ratio (G/K) entre le module de cisaillement (G) et le module de compression (K) de l'architecture composite dans son ensemble en fonction (en abscisses) de la densité du matériau, pour plusieurs valeurs de proportion relative de « zones molles » (Voronoï) par rapport aux « zones dures » (Delaunay).

## Description détaillée de l'invention

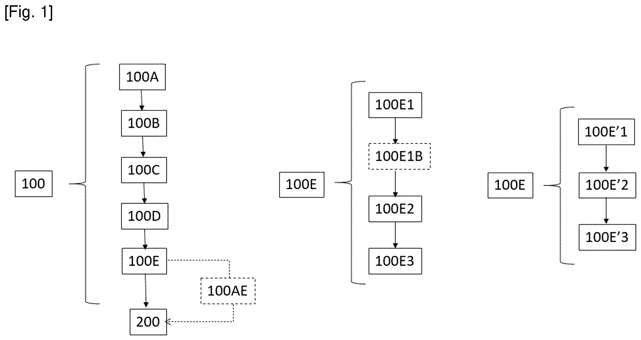

La figure 1 est une représentation schématique des différentes étapes principales du procédé selon l'invention.
L'invention concerne un procédé de fabrication d'une pièce bi ou tri-dimensionnelle présentant une architecture composite avec au moins deux micro-treillis différents, connectés l'un à l'autre, comprenant les étapes suivantes :

- effectuer 100 une étape de conception mise en oeuvre par ordinateur ; puis
- fabriquer 200 l'architecture ainsi conçue.

L'étape de conception mise en oeuvre par ordinateur comporte les étapes A) à E) suivantes.
L'étape A) consiste à définir 100A un domaine représentant la pièce bi- ou tri-dimensionnelle à fabriquer, puis définir un premier sous-domaine destiné à délimiter un premier micro-treillis ainsi qu'au moins un deuxième sous-domaine, complémentaire au premier sous-domaine, quant à lui destiné à délimiter un deuxième micro-treillis différent du premier micro-treillis.
B) définir (100B), sur l'ensemble du domaine, les coordonnées de centres générateurs pour le premier micro-treillis et le deuxième micro-treillis, comme suit :

L'étape B) consiste à définir, sur l'ensemble du domaine, les coordonnées des centres générateurs pour le premier micro-treillis et le deuxième micro-treillis comme suit :

B1) à partir d'un arrangement 100BINIT aléatoire bi ou tri-dimensionnel de billes indéformables de diamètres donnés dans l'ensemble dudit domaine, réaliser 100B1 un empilement compact aléatoire desdites billes au sein dudit domaine,

B2) pour chaque bille de l'empilement compact aléatoire bi ou tri-dimensionnel dudit domaine, déterminer 100B2 les coordonnées du centre de la bille, puis

B3) pour chaque bille de l'empilement compact aléatoire bi ou tri-dimensionnel dudit domaine, associer 100B3 les coordonnées du centre de la bille à celles d'un centre générateur pour l'un quelconque du premier ou du deuxième micro-treillis,

L'étape C) consiste à définir le premier micro treillis délimité par le premier sous domaine comme suit :

C1) réaliser 100C1 une triangulation de Delaunay avec les centres générateurs (en l'occurrence des noeuds) puis, associer deux noeuds reliés par un côté de triangle à une micro-poutre,

C2) supprimer 100C2 chaque micro-poutre dont aucun des deux noeuds n'appartient au premier sous-domaine,

C3) identifier et supprimer 100C3 chaque micro-poutre dont l'un des deux noeuds seulement appartient au premier sous-domaine, le noeud appartenant au premier sous-domaine étant alors identifié comme noeud frontière du premier sous-domaine.

Puis, l'étape D) consiste, à partir des coordonnées des centres générateurs obtenus à l'issue de l'étape B3), définir 100D un deuxième micro-treillis différent du premier micro-treillis et délimité par le deuxième sous-domaine, comme suit :

D1) générer 100D1 un diagramme de Voronoï en utilisant lesdits centres générateurs comme germes dudit diagramme puis, associer deux noeuds reliés par le diagramme de Voronoï à une micro-poutre,

D2) supprimer 100D2 chaque micro-poutre dont aucun des deux noeuds n'appartient au deuxième sous-domaine,

D3) identifier et supprimer 100D3 chaque micro-poutre dont l'un des deux noeuds seulement appartient au deuxième sous-domaine, le noeud appartenant au deuxième sous-domaine étant identifié comme noeud frontière du deuxième sous-domaine.

L'étape E) consiste à connecter 100E le deuxième micro-treillis au premier micro-treillis. D'un point de vue pratique, il y a différentes façons de connecter le deuxième micro-treillis au premier micro-treillis, ce qui sera détaillé par la suite.

L'étape de conception prévoit aussi de définir une forme et des dimensions transversales associées pour chaque micro-poutre.

Nous allons expliciter ce procédé à l'appui d'un exemple de réalisation. Par souci de clarté de la représentation, nous avons choisi de le faire en 2 dimensions, mais l'extrapolation en 3 dimensions est directe.

Etape A)

L'étape 100A consiste à définir un domaine représentant la pièce bi- ou tri-dimensionnelle à fabriquer, puis définir un premier sous-domaine destiné à délimiter un premier micro-treillis ainsi qu'un deuxième sous-domaine, complémentaire au premier sous-domaine, quant à lui destiné à délimiter un deuxième micro-treillis différent du premier micro-treillis.

Un exemple de domaine séparé en un premier sous-domaine (en blanc) et un deuxième sous-domaine (en gris) est fourni en figure 2.

Etape B)

On part 100BINIT d'un arrangement aléatoire tridimensionnel de billes indéformables. Le terme de billes couvre indifféremment une boule (plein) ou une sphère (creux) au sens mathématique du terme.

Ces billes ont chacune un diamètre donné. Il est important de pouvoir fixer ces diamètres puisqu'ils déterminent, dans le procédé selon l'invention, la longueur des micro-poutres.

Le diamètre des différentes billes n'est pas nécessairement identique.

Toutefois, il est avantageux de partir d'un arrangement avec des billes ayant des diamètres proches, typiquement avec une variation n'excédant pas 30% par rapport à une valeur moyenne, ou identiques pour minimiser l'écart-type à partir de la longueur moyenne des micro-poutres présentes dans le micro-treillis que l'on cherche à fabriquer. L'homogénéité de la longueur des micro-poutres contribue en effet, avec le caractère aléatoire de la distribution des billes au sein de l'empilement compact tridimensionnel de billes, à définir une architecture isotrope.

A partir cet état initial, l'étape a pour but d'obtenir 100B1 un empilement compact aléatoire desdites billes au sein de l'ensemble du domaine.

Il existe dans la littérature différents types d'algorithmes permettant d'obtenir ce type d'empilement. Ainsi, il est envisageable d'utiliser un algorithme de Lubachevsky-Stillinger, un algorithme dit de « force-biased » selon la terminologie anglo-saxonne qui peut être traduit par « biais de force » en français, un algorithme dérivé de ceux-ci ou encore une succession quelconque de ces différents algorithmes.

L'algorithme de Lubachevsky-Stillinger est largement connu et a fait l'objet de nombreuses publications. On pourra toutefois se référer à l'article de Lubachevsky, Boris D.; Stillinger, Frank H. (1990) : Geometric properties of random disk packings, Journal of Statistical Physics, 60 (5-6): 561-583.

L'algorithme dit de « force-biased » est également largement connu et a fait l'objet de nombreuses publications. On pourra toutefois se référer à J. Mościński, M. Bargief, Z. A. Rycerz & P. W. M. Jacobs (1989) The Force-Biased Algorithm for the Irregular Close Packing of Equal Hard Spheres, Molecular Simulation, 3:4, 201-212.

Dans le cas présent, voici la procédure employée dans l'exemple considéré pour générer l'arrangement aléatoire de billes au sein dudit domaine et mettre donc en oeuvre l'étape 100B1.

On a utilisé l'algorithme développé par Vasili Baranau, accessible à l'adresse https://github.com/VasiliBaranov/packing-generation (distribué sous License MIT).

L'utilisateur doit préciser en entrée : 1) la taille du récipient contenant l'empilement, 2) les diamètres des billes, 3) le nombre d'itérations de l'algorithme, 4) le taux de contraction, 5) un nombre entier servant de germe pour le générateur de nombres pseudo-aléatoires.

Le récipient, circulaire (on est en 2D), a été choisi avec un rayon de taille 100 (dimension arbitraire). Il s'agit de la taille du récipient avant compaction des billes.

Les billes ont été choisies avec des diamètres quasi-identiques, avec une distribution log normale de valeur moyenne fixée à 1 (dimension arbitraire) et un écart type de 0,2. 8800 billes ont été prises en considération.

100 itérations ont été effectuées.

Le taux de contraction a été choisi à 0,1 (unité arbitraire). Plus le taux de contraction est faible et plus la compacité de l'empilement de billes sera importante.

Le nombre entier qui sert de germe pour le générateur de nombres pseudo-aléatoires a été choisi au hasard. L'algorithme utilise ce germe pour générer les positions initiales de billes dans le récipient.

L'exécution de l'algorithme (appelé PackingGeneration.exe) est ensuite réalisé en mode « fba » (il s'agit d'un algorithme « Forced-Biased ») Le pré-empilement obtenu après avoir mis en oeuvre cet algorithme est donné dans un fichier packing.xyzd contenant les positions X, Y et diamètres D de chaque bille. A ce fichier packing.xyzd, est adossé un autre fichier packing.nfo contenant divers paramètres caractéristiques du pré-empilement (e. g. compacité).

On utilise ensuite ces deux derniers fichiers comme entrées du même algorithme (PackingGeneration.exe) mais exécuté en mode « ls » (indique un algorithme de Lubachevsky-Stillinger). On obtient alors un nouveau fichier packing.xyzd contenant les positions X, Y, Z et les diamètres D mis à jour après compaction et aussi un nouveau fichier packing.nfo comportant des informations sur le pré-empilement ainsi obtenu.

On utilise ces nouveaux fichiers packing.xyzd et packing.nfo comme entrées du même algorithme (Packing-Generation.exe) mais maintenant, en mode « lsgd » (algorithme dérivé de celui de Lubachevsky-Stillinger, comportant une option dite de densification graduelle). A ce stade, le fichier packing.xyzd contient les positions et diamètres des billes dans l'empilement compact aléatoire tridimensionnel et le fichier contient différentes informations sur l'empilement et en particulier, sa compacité. La compacité obtenue dans cet exemple de réalisation est de 0,88.

Finalement, les coordonnées X, Y du centre de chaque bille ont été modifiées dans le fichier packing.xyzd, en divisant les valeurs mentionnées par un facteur F de remise à l'échelle défini comme suit :

[Maths1]
$$F = \left(\frac{1-p_{fin}}{1-p_{th}}\right)^{1/3}$$

où les paramètres $p_{fin}$ et $p_{th}$ sont tous deux donnés dans packing.info. Dans le cas d'espèce, le facteur F de remise à l'échelle est de F = 1,0842. La mise en oeuvre de cette correction est liée à la mise en oeuvre du programme informatique choisi pour illustrer le procédé selon l'invention, mais n'a rien de systématique pour mettre en oeuvre l'étape 101 du procédé selon l'invention.

La figure 3 représente l'empilement aléatoire compact de billes indéformables de diamètres quasi-identiques (la variabilité des diamètres ne dépasse pas 20% par rapport à un diamètre moyen), obtenu après avoir mis en oeuvre par ordinateur l'étape 100B1 du procédé selon l'invention. La géométrie 2D de l'empilement impose en effet une distribution statistique des diamètres pour éviter la cristallisation. Ici cette distribution est log normale avec une valeur moyenne fixée à 1 et un écart type de 0,2.

Ensuite, l'étape 100B2 consiste, pour chaque bille de l'empilement compact aléatoire bi ou tri-dimensionnel dudit domaine, à déterminer 100B2 les coordonnées du centre de chaque bille.

Dans le cas d'espèce, les coordonnées du centre de chaque bille sont en l'occurrence disponibles dans le fichier packing.xyzd obtenu à l'issue de l'étape 100B1.

Puis, l'étape 100B3 consiste, pour chaque bille de l'empilement compact aléatoire bi ou tri-dimensionnel du domaine, à associer les coordonnées du centre de la bille à celles d'un centre générateur pour l'un quelconque du premier ou du deuxième micro-treillis.

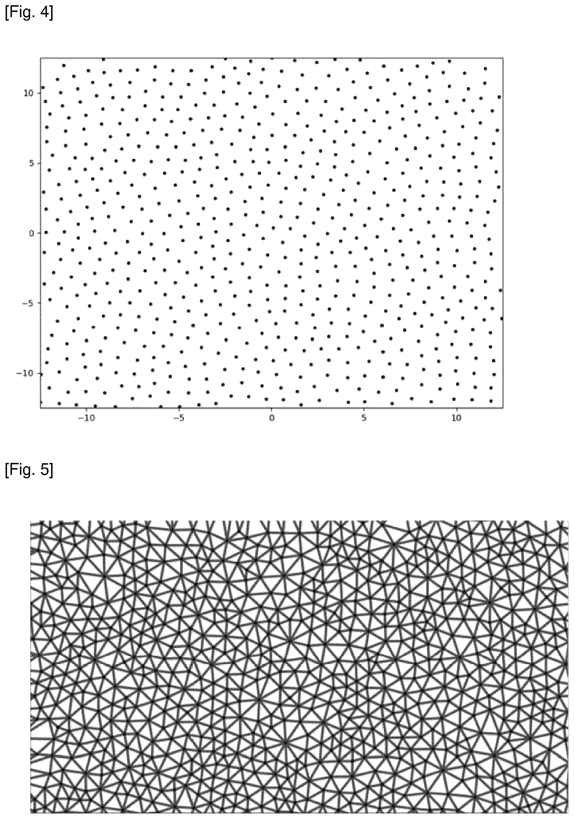

La figure 4 représente le nuage de centres générateurs obtenu après avoir mis en oeuvre par ordinateur l'étape 100B3.

Etape C)

L'objectif de l'étape 100C est de définir un premier micro-treillis délimité par le premier sous-domaine.

Lors d'une étape 100C1, on réalise une triangulation de Delaunay avec les centres générateurs obtenus à l'issue de l'étape B3).

Cette triangulation définit les triangles avec les noeuds les plus proches ce qui permet de conserver une certaine homogénéité dans la longueur des côtés de chaque triangle. Cette homogénéité est importante car elle définit, comme on le verra dans la suite de la description, l'homogénéité dans la longueur des micro-poutres. Or, définir des micro-poutres avec des longueurs homogènes (faible dispersion) au sein du micro-treillis à fabriquer est important pour obtenir de bonnes propriétés mécaniques, en particulier en ce qui concerne la rigidité (rapport $E/\rho$). Une triangulation de Delaunay a été mise en oeuvre dans l'exemple de réalisation suivi. Plus précisément, on pourra se référer au document suivant donnant l'algorithme: https://docs.scipy.org/doc/scipy/reference/generated/scipy.spatial.Delaunay.html (Python). C'est ce qui a été employé dans le cadre de l'exemple de réalisation décrit ici.

Puis, il suffit alors, pour définir le micro-treillis, d'associer dans un fichier dédié deux noeuds reliés par un côté de triangle à une micro-poutre.

La longueur d'une micro-poutre est alors entièrement déterminée par la distance séparant deux noeuds appartenant à un même triangle. La distance séparant deux noeuds appartenant à un même triangle est elle-même définie par le diamètre choisi des billes avant la mise en oeuvre du procédé selon l'invention et l'étape 100B1 de réalisation de l'empilement compact aléatoire au sein dudit domaine.

La forme des micro-poutres et les dimensions transversales associées sont des données fournies indépendamment.

La définition de la forme et des dimensions transversales des micro-poutres peut s'effectuer à divers moments au cours de l'étape 100 de conception. Cette donnée ne devient en effet utile que pour procéder à la fabrication proprement dite.

En particulier, une fois la forme fixée, déterminer les dimensions transversales permet de régler la densité relative finale du micro-treillis. Ces dimensions transversales peuvent être différentes d'une micro-poutre à l'autre. Toutefois, le choix d'une section de forme identiques avec des mêmes dimensions transversales sur toutes les micro-poutres permet de contrôler aisément la densité relative de l'architecture qu'on cherche à fabriquer. Ainsi, par exemple en bidimensionnel (2D), si ces dimensions transversales sont significativement plus petites que la longueur des micro-poutres (situation permettant d'obtenir une densité relative faible), la densité relative de l'architecture qui sera fabriquée évolue comme le rapport entre cette dimension transversale et la longueur moyenne des micro-poutres.

En pratique, en 2D, on peut prévoir une micro-poutre en forme de plaque. En 3D, on peut par exemple prévoir une forme cylindrique.

La figure 5 représente le micro-treillis obtenu à l'issue de l'étape 100C1.

Ensuite, on met en oeuvre une étape 100C2 consistant à supprimer chaque micro-poutre dont aucun des deux noeuds n'appartient au premier sous-domaine.

Puis, on met en oeuvre une étape 100C3 consistant à identifier et supprimer chaque micro-poutre dont l'un des deux noeuds seulement appartient au premier sous-domaine. Le noeud appartenant au premier sous-domaine est alors identifié comme noeud frontière du premier sous-domaine.

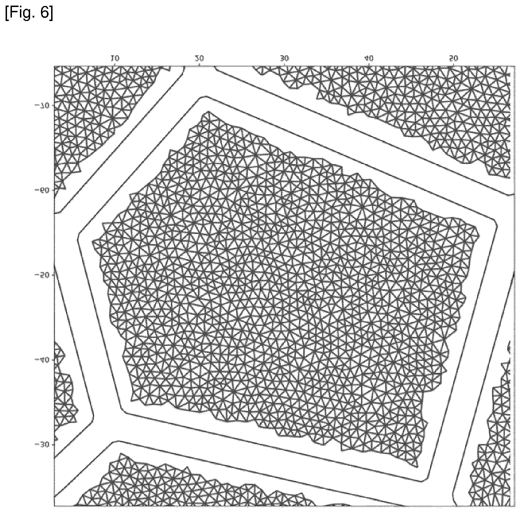

La figure 6 représente le micro-treillis obtenu à l'issue de l'étape 100C3.

L'étape C) permet ainsi de générer au sein du premier sous-domaine un micro-treillis avec une architecture globalement amorphe, isotrope et de ratio $E/\rho$ maximal. La construction de ce micro-treillis se base sur une triangulation de Delaunay, appliquée à un empilement compact aléatoire de billes, avantageusement monodisperses. Cette triangulation garantit, pour un domaine donné de taille cohérente avec celles d'un triangle (à savoir un domaine de taille beaucoup plus importante que celles des triangles), que la connectivité en tout noeud est au moins égale à 6 en deux dimensions (2D), ou au moins égale à 12 en trois dimensions (3D) et l'isotropie globale est alors héritée de la construction globalement amorphe de l'empilement de billes. Ce micro-treillis présente donc un module d'Young et un module de Poisson sensiblement bien définis, et une grande rigidité. La rigidité varie alors sensiblement linéairement avec la densité en 2D comme en 3D.

Etape D)

L'objectif de l'étape 100D est de définir le deuxième micro-treillis, différent du premier micro-treillis, et délimité par le deuxième sous-domaine. Le deuxième sous-domaine est complémentaire au premier sous-domaine au sein du domaine.

Ici, à partir des coordonnées des centres générateurs obtenus à l'issue de l'étape B3), l'étape 100D1 consiste à générer un diagramme de Voronoï en utilisant les centres générateurs comme germes dudit diagramme puis, ledit diagramme à relier deux noeuds du diagramme de Voronoï par une micro-poutre. Autrement dit, on associe chacune des arêtes des polygones (en deux dimensions) ou polyèdres (en trois dimensions) définies par le diagramme de Voronoï à une micro-poutre, et chacun des sommets de ces polygones ou polyèdres à un noeud.

Ensuite, il convient de supprimer lors de l'étape 100D2 chaque micro-poutre dont aucune des deux noeuds n'appartient au deuxième sous-domaine.

Puis, il convient enfin d'identifier et de supprimer 100D3 chaque micro-poutre dont l'un des deux noeuds seulement appartient au deuxième sous-domaine, le noeud appartenant au sous-domaine étant alors identifié comme noeud frontière du deuxième sous-domaine.

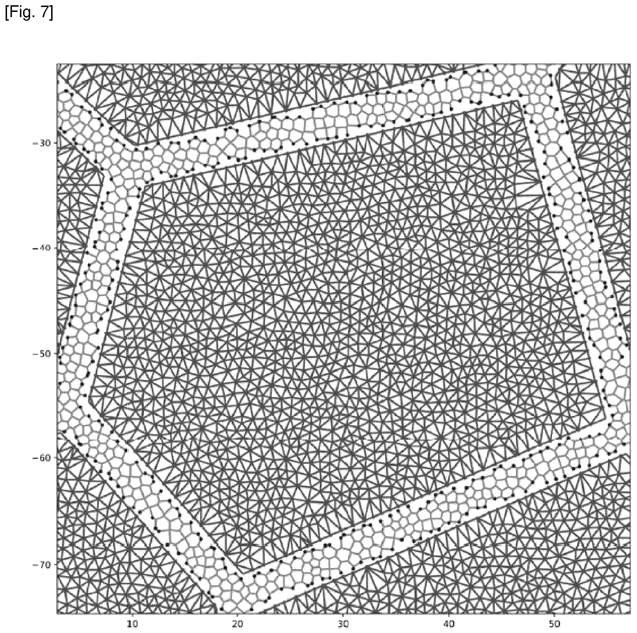

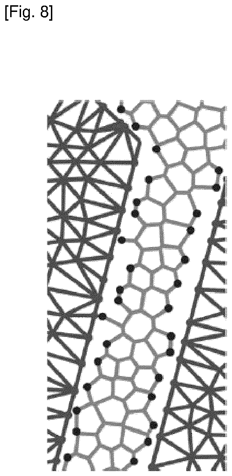

Le résultat de la tessellation de Voronoï effectuée dans le deuxième sous-domaine est visible sur les figures 7 et 8. La figure 8 est une vue agrandie de la figure 7, au niveau d'une zone frontière entre les deux sous-domaines. Les noeuds frontières sont identifiés par des cercles.

L'étape D) permet ainsi de générer un micro-treillis pour le deuxième sous-domaine avec une architecture globalement amorphe, isotrope et de ratio $E/\rho$ minimal. La construction de ce micro-treillis se base sur une tessellation de Voronoï appliquée à un empilement compact aléatoire de billes, avantageusement monodisperses. La tessellation de Voronoï garantit que la connectivité en tout noeud est égale à 3 en deux dimensions (2D), ou égale à 4 en trois dimensions (3D) et l'isotropie globale est alors héritée de la construction globalement amorphe de l'empilement de billes. Ce micro-treillis présente donc un module d'Young et un module de Poisson sensiblement bien définis, et une faible rigidité. Le module d'Young varie sensiblement comme le cube de la densité en 2D, ou comme le carré de la densité en 3D.

Etape E)

L'étape 100E consiste à connecter le deuxième micro-treillis (obtenu à l'issue de l'étape D) au premier micro-treillis (obtenu à l'issue de l'étape C).

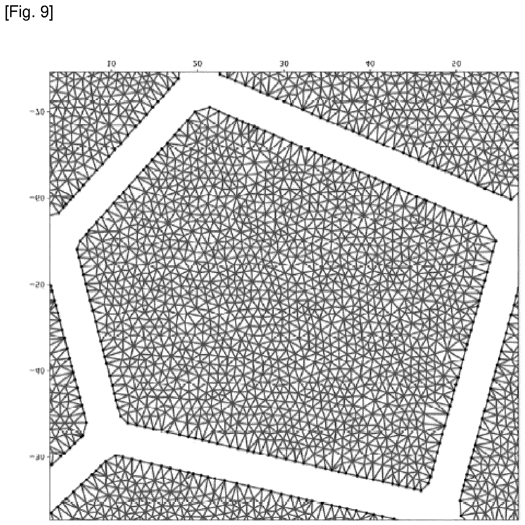

La figure 9 permet de mieux visualiser ce qui est effectué sur le premier sous-domaine depuis la configuration de la figure 7 pour faire correspondre la triangulation de Delaunay avec les limites du premier sous-domaine.

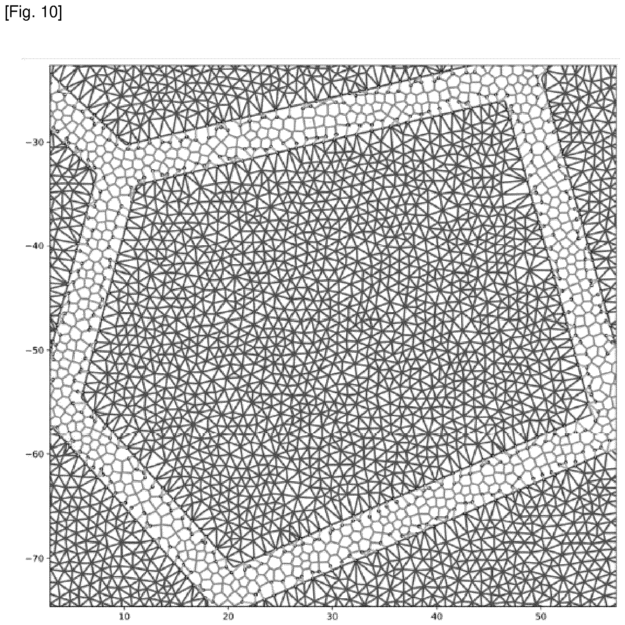

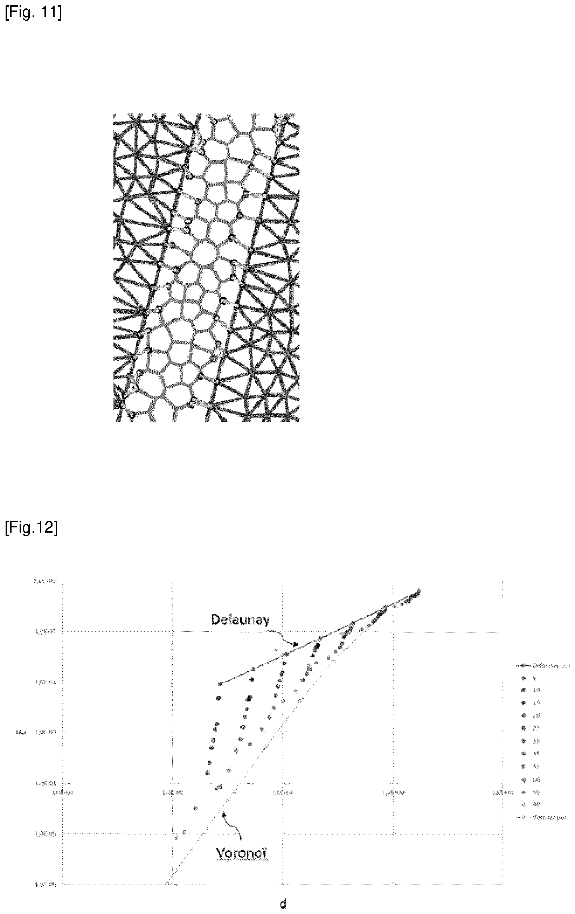

Les figures 10 et 11 montrent quant à elles plus précisément la connexion entre les deux sous-domaines.

A l'étape C3), chaque micro-poutre dont l'un des deux noeuds seulement appartenait au premier sous-domaine a été identifiée avant d'être supprimée.

Ainsi, dans un premier temps, pour chaque micro-poutre ainsi identifiée puis supprimée à l'issue de l'étape C3), on peut redéfinir 100E1 le noeud frontière du premier sous-domaine au point de croisement de la micro-poutre identifiée puis supprimée avec la limite du premier sous-domaine, puis définir une nouvelle micro-poutre entre l'ancien noeud frontière et le noeud frontière ainsi redéfini.

Dans le cas d'espèce, il est par ailleurs prévu, après l'étape 100E1 une étape 100E1B (optionnelle) au cours de laquelle on relie chaque noeud frontière du premier sous-domaine avec le noeud frontière le plus proche du premier sous-domaine. Cela permet d'augmenter la connectivité des noeuds en frontière du premier sous-domaine. Cette étape 100E1B peut s'effectuer juste après l'étape 100E1, mais peut aussi s'effectuer ultérieurement au cours de l'étape 100E.

La figure 9 représente le micro-treillis obtenu à l'issue de l'étape 100E1B.

Pour chaque noeud frontière du deuxième sous domaine identifié à l'étape 100D3, il convient de chercher lors de l'étape 100E2 le noeud frontière du premier sous domaine qui lui est le plus proche et de relier ces deux noeuds par une micro-poutre.

Puis, pour chaque noeud frontière du premier sous domaine qui n'a pas été relié à l'issue de l'étape 100E2, il convient ensuite de chercher lors de l'étape 100E3, le noeud frontière du deuxième sous domaine qui lui est le plus proche et de relier ces deux noeuds par une micro-poutre.

Ceci permet de s'assurer que chaque noeud frontière d'un sous-domaine est connecté à un noeud frontière de l'autre sous-domaine.

La figure 10 montre ce que l'on obtient à l'issue de l'étape E) telle que décrite ci-dessus. La figure 11 est une vue agrandie de la figure 10 au niveau d'une zone frontière entre les deux sous-domaines.

La conception est à ce stade terminée.

Il suffit alors de mettre en oeuvre l'étape 200 de fabrication.

Toutefois, en fonction de la méthode de fabrication employée, il peut s'avérer nécessaire de mettre en oeuvre une étape additionnelle 100AE au cours de l'étape 100 de conception consistant à réaliser un maillage représentatif du micro-treillis obtenu à l'issue de l'étape 100E. Ce maillage est typiquement réalisé avec un logiciel de conception assistée par ordinateur (CAO). C'est par exemple le cas si l'étape 200 de fabrication s'effectue par fabrication additive. L'étape 100AE peut par ailleurs être mise à profit pour définir une forme et des dimensions transversales associées pour chaque micro-poutre, par exemple une forme de plaque pour un micro-treillis bidimensionnel (2D), ou une forme de cylindre avec la définition de son diamètre pour un micro-treillis tridimensionnel (3D).

Par ailleurs, il à noter que d'autres stratégies de connexion entre les deux sous-domaines sont envisageables.

On peut par exemple procéder comme suit.

A l'étape D3), chaque micro-poutre dont l'un des deux noeuds seulement appartenait au deuxième sous-domaine a été identifiée avant d'être supprimée.

Ainsi, dans un premier temps, pour chaque micro-poutre ainsi identifiée puis supprimée à l'issue de l'étape D3), on peut redéfinir 100E'1 le noeud frontière du deuxième sous-domaine au point de croisement de la micro-poutre identifiée puis supprimée avec la limite du deuxième sous-domaine, puis définir une nouvelle micro-poutre entre l'ancien noeud frontière et le noeud frontière ainsi redéfini.

Pour chaque noeud frontière du premier sous-domaine identifié à l'étape 100C3, il convient de chercher lors de l'étape 100E'2 le noeud frontière du deuxième sous-domaine qui lui est le plus proche et de relier ces deux noeuds par une micro-poutre.

Puis, pour chaque noeud frontière du deuxième sous-domaine qui n'a pas été relié à l'issue de l'étape 100E'2, il convient de chercher lors de l'étape 100E'3 le noeud frontière du premier sous domaine qui lui est le plus proche et de relier ces deux noeuds par une micro-poutre.

Il est envisageable de prévoir une étape additionnelle (optionnelle), par exemple après l'étape 100E'1, visant à augmenter la connectivité des noeuds en frontière des deux sous domaines, dans le but de pouvoir réaliser une transition plus douce avec l'autre sous-domaine.

Par ailleurs, il convient aussi de noter que l'ordre des étapes, allant de l'étape A) à l'étape E) en suivant l'ordre alphabétique dans l'exemple de réalisation fourni précédemment peut être adapté. Ainsi, les étapes C) et D) peuvent être interverties.

On comprend enfin que si dans l'exemple de réalisation fourni précédemment, le premier sous-domaine dans lequel la triangulation de Delaunay est effectuée est le plus grand des deux sous-domaines (cf. figures), ceci n'est qu'un choix pour les besoins de l'illustration. Ainsi, en fonction du résultat recherché, le premier sous domaine dans lequel la triangulation de Delaunay s'effectue pourrait très bien être le plus petit des deux sous domaines.

Dans le cadre de l'invention, il est possible de fabriquer une architecture composite composée de zones dures (triangulation de Delaunay) et de zones molles (tessellation de Voronoï) sur un domaine susceptible de présenter n'importe quelle géométrie, que ce soit en deux dimensions ou en trois dimensions. La densité de chacun de ces micro treillis est modulable sur une large gamme, leur module élastique aussi, ainsi que le ratio réponse en cisaillement sur réponse en compression. Les gammes accessibles couvrent plusieurs ordres de grandeurs.

En assemblant judicieusement les zones dures et molles, il est par ailleurs possible, sans pour autant utiliser des matériaux constitutifs différents pour ces zones, de reproduire les différents mécanismes manipulés dans les composites classiques : mécanismes de renforcement, gradients de propriétés fonctionnelles, combinaison de propriétés a priori exclusives (structure brique et mortier de la nacre lui conférant dureté et ténacité par exemple).

Par ailleurs, dans le cadre de la présente invention on génère, pour chaque micro-treillis de l'architecture composite, une architecture amorphe sans partir d'un réseau périodique, et qui du coup présente une absence d'ordre à moyenne et longue portée. Au sein de chaque micro-treillis, le comportement mécanique est donc globalement isotrope. Par ailleurs, les performances mécaniques obtenues sont optimales (par exemple, ratio $E/\rho$ maximal dans les zones dures et ratio $E/\rho$ minimal dans les zones molles).

Finalement, en fonction de la répartition prescrite des zones dures et molles, le comportement mécanique local dans le micro-treillis total est modulable.

La figure 12 montre par exemple la modularité du module d'Young (E) de l'architecture composite dans son ensemble en fonction (en abscisses) de la densité (d) du matériau, pour plusieurs valeurs de proportion relative de « zones molles » (Voronoï) par rapport aux « zones dures » (Delaunay). On visualise en particulier sur la figure une droite représentant l'évolution du module d'Young en fonction de la densité en Voronoï pur, ainsi qu'a contrario une autre droite représentant cette même évolution mais en Delaunay pur. Entre ces deux droites, on observe qu'en faisant varier la densité du matériau ainsi que la proportion des différentes zones molles ou dures, il est possible de paver une large gamme de valeurs de module d'Young.

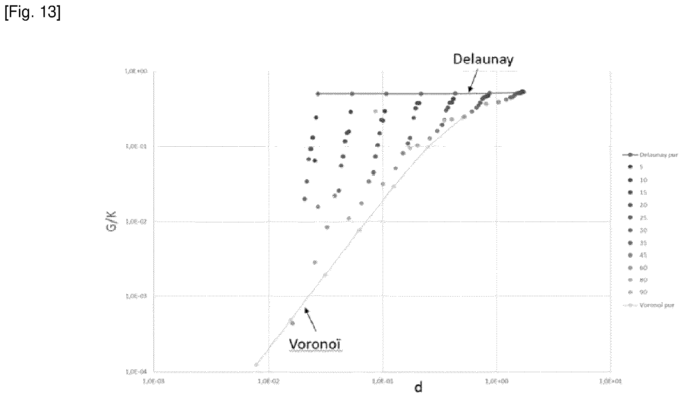

La figure 13 montre quant à elle la modularité du ratio (G/K) entre le module de cisaillement (G) et le module de compression (K) de l'architecture composite dans son ensemble en fonction (en abscisses) de la densité (d) du matériaux, pour plusieurs valeurs de proportion relative de « zones molles » par rapport aux « zones dures ». On visualise en particulier sur la figure une droite représentant l'évolution du rapport G/K en fonction de la densité en Voronoï pur, ainsi qu'a contrario une autre droite représentant cette même évolution mais en Delaunay pur. Entre ces deux droites, on observe qu'en faisant varier la densité du matériau ainsi que la proportion des différentes zones, il est possible d'obtenir modulairement un matériau résistant préférentiellement aux déformations en compression ou aux déformations en cisaillement.

Il est par ailleurs possible de subdiviser au cours de l'étape A) le domaine en plus de deux sous-domaines pour délimiter autant de micro-treillis différents les uns des autres. Ainsi, on peut par exemple subdiviser le domaine en N sous-domaines, avec N un entier naturel supérieur ou égal à 3, dans lequel les différents sous-domaines sont complémentaires les uns aux autres au sein du domaine.

Il suffit d'alors d'adapter le procédé avec des étapes additionnelles. Par exemple, si on considère N = 3 sous-domaines au cours de l'étape A), on continue avec les étapes B) et C) puis on ajoute une étape C') sur un autre sous-domaine similaire à l'étape C) avant d'enchainer avec l'étape D) pour le dernier sous-domaine. La connexion entre deux sous-domaines suit alors les mêmes règles que celles exposées pour l'étape E).

L'invention concerne aussi une pièce bi ou tri-dimensionnelle présentant une architecture composite avec au moins deux micro-treillis différents connectés l'un à l'autre, le premier micro-treillis, isotrope, présentant une architecture réalisée avec des micro-poutres reliées entre elles en formant des triangles de Delaunay et le deuxième micro-treillis, également isotrope, présentant une architecture réalisée avec des micro-poutres reliées entre elles en formant des cellules de Voronoï, chaque noeud frontière du deuxième sous-domaine étant connecté à un noeud frontière du premier sous-domaine et inversement.

Cette pièce est celle qui est directement obtenue par la mise en oeuvre des étapes A) à E) décrites précédemment.

## Revendications

1.  Procédé de fabrication d'une pièce bi ou tri-dimensionnelle présentant une architecture composite avec au moins deux micro-treillis différents connectés l'un à l'autre, comprenant les étapes suivantes :

    • effectuer (100) une étape de conception mise en oeuvre par ordinateur comportant les étapes suivantes :

    A) définir (100A) un domaine représentant la pièce bi- ou tri-dimensionnelle à fabriquer, puis définir un premier sous-domaine destiné à délimiter un premier micro-treillis ainsi qu'au moins un deuxième sous-domaine, complémentaire au premier sous-domaine, quant à lui destiné à délimiter un deuxième micro-treillis différent du premier micro-treillis ;
    B) définir (100B), sur l'ensemble du domaine, les coordonnées de centres générateurs pour le premier micro-treillis et le deuxième micro-treillis, comme suit :

    B1) à partir d'un arrangement (100BINIT) aléatoire bi ou tri-dimensionnel de billes indéformables de diamètres donnés dans l'ensemble dudit domaine, réaliser (100B1) un empilement compact aléatoire desdites billes au sein dudit domaine,
    B2) pour chaque bille de l'empilement compact aléatoire bi ou tri-dimensionnel dudit domaine, déterminer (100B2) les coordonnées du centre de la bille, puis
    B3) pour chaque bille de l'empilement compact aléatoire bi ou tri-dimensionnel dudit domaine, associer (100B3) les coordonnées du centre de la bille à celles d'un centre générateur pour l'un quelconque du premier ou du deuxième micro-treillis,

    C) définir (100C) le premier micro-treillis délimité par le premier sous-domaine comme suit :

    C1) réaliser (100C1) une triangulation de Delaunay avec les centres générateurs puis associer deux noeuds reliés par un côté de triangle à une micro-poutre,
    C2) supprimer (100C2) chaque micro-poutre dont aucun des deux noeuds n'appartient au premier sous-domaine,
    C3) identifier et supprimer (100C3) chaque micro-poutre dont l'un des deux noeuds seulement appartient au premier sous-domaine, le noeud appartenant au premier sous-domaine étant alors identifié comme noeud frontière du premier sous-domaine,

D) à partir des coordonnées des centres générateurs obtenus à l'issue de l'étape B3), définir (100D) le deuxième micro-treillis différent du premier micro-treillis et délimité par le deuxième sous-domaine, comme suit :

D1) générer (100D1) un diagramme de Voronoï en utilisant les centres générateurs comme germes dudit diagramme puis, associer deux noeuds reliés par le diagramme de Voronoï à une micro-poutre,
D2) supprimer (100D2) chaque micro-poutre dont aucun des deux noeuds n'appartient au deuxième sous-domaine,
D3) identifier et supprimer (100D3) chaque micro-poutre dont l'un des deux noeuds seulement appartient au deuxième sous-domaine, le noeud appartenant au deuxième sous-domaine étant identifié comme noeud frontière du deuxième sous-domaine ;

E) connecter (100E) le deuxième micro-treillis au premier micro-treillis.

l'étape de conception prévoyant aussi de définir une forme et des dimensions transversales associées pour chaque micro-poutre, puis :

• fabriquer (200) l'architecture ainsi conçue.

**2.** Procédé selon la revendication 1, **caractérisé en ce que** l'étape B1) est mise en oeuvre à partir d'un arrangement aléatoire de billes de diamètres identiques.

**3.** Procédé selon l'une des revendications précédentes, **caractérisé en ce que** l'étape B1) est mise en oeuvre par un algorithme de Lubachevsky-Stillinger, un algorithme dit de biais de force, un algorithme dérivé de ceux-ci ou encore une succession quelconque de ces différents algorithmes.

**4.** Procédé selon l'une des revendications précédentes, **caractérisé en ce que** l'étape E) comprend les étapes suivantes :

E1) pour chaque micro-poutre identifiée puis supprimée obtenue à l'étape C3), redéfinir (100E1) le noeud frontière du premier sous-domaine au point de croisement de la micro-poutre identifiée puis supprimée avec la limite du premier sous-domaine, puis définir une nouvelle micro-poutre entre l'ancien noeud frontière et le noeud frontière ainsi redéfini,
E2) pour chaque noeud frontière du deuxième sous-domaine, chercher (100E2) le noeud frontière du premier sous-domaine qui lui est le plus proche et relier ces deux noeuds par une micro-poutre,
E3) pour chaque noeud frontière du premier sous-domaine qui n'a pas été relié à l'issue de l'étape E2), chercher (100E3) le noeud frontière du deuxième sous-domaine qui lui est le plus proche et relier ces deux noeuds par une micro-poutre.

**5.** Procédé de fabrication selon la revendication précédente, **caractérisé en ce que** l'étape E) comporte, après l'étape E1), une étape additionnelle (100E1B) consistant à relier chaque noeud frontière du premier sous-domaine avec le noeud frontière le plus proche du premier sous-domaine.

**6.** Procédé selon l'une des revendications 1 à 3, **caractérisé en ce que** l'étape E) comprend les étapes suivantes :

E'1) pour chaque micro-poutre obtenue identifiée puis supprimée à l'étape D3), redéfinir (100E'1) le noeud frontière du deuxième sous-domaine au point de croisement de la micro-poutre identifiée puis supprimée avec la limite du deuxième sous-domaine, puis définir une nouvelle micro-poutre entre l'ancien noeud frontière et le noeud frontière ains redéfini,
E'2) pour chaque noeud frontière du premier sous-domaine, chercher (100E'2) le noeud frontière du deuxième sous-domaine qui lui est le plus proche et relier ces deux noeuds par une micro-poutre,
E'3) pour chaque noeud frontière du deuxième sous-domaine qui n'a pas été relié à l'issue de l'étape E'2), chercher (100E'3) le noeud frontière du premier sous-domaine qui lui est le plus proche et relier ces deux noeuds par une micro-poutre.

**7.** Procédé selon l'une des revendications précédentes, **caractérisé en ce qu'**il comprend une étape (100AE), mise en oeuvre à l'issue de l'étape (100) de conception et consistant à réaliser un maillage de chaque micro-treillis avant de mettre en oeuvre l'étape fabrication.

8. Procédé selon la revendication précédente, **caractérisé en ce que** l'étape de fabrication est réalisée par fabrication additive.

9. Pièce bi ou tri-dimensionnelle présentant une architecture composite avec au moins deux micro-treillis différents connectés l'un à l'autre, le premier micro-treillis, isotrope, présentant une architecture réalisée avec des micro-poutres reliées entre elles en formant des triangles de Delaunay et le deuxième micro-treillis, également isotrope, présentant une architecture réalisée avec des micro-poutres reliées entre elles en formant des cellules de Voronoï, chaque noeud frontière du deuxième sous-domaine étant connecté à un noeud frontière du premier sous-domaine et inversement.

[Fig. 1]

[Fig. 2]

[Fig. 3]

[Fig. 4]

[Fig. 5]

[Fig. 6]

[Fig. 7]

EP 4 571 560 A1

[Fig. 8]

[Fig. 9]

[Fig. 10]

EP 4 571 560 A1

[Fig. 11]

[Fig.12]

22

[Fig. 13]

| Europäisches Patentamt European Patent Office Office européen des brevets | **RAPPORT DE RECHERCHE EUROPEENNE** | Numéro de la demande<br>EP 24 21 9653 |
| --- | --- | --- |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
| --- | --- | --- | --- |
| A | WO 2023/174953 A1 (COMMISSARIAT ENERGIE ATOMIQUE [FR]; CENTRE NAT RECH SCIENT [FR]) 21 septembre 2023 (2023-09-21)<br>* abrégé *<br>* figures 3, 4, 7 *<br>* revendications 1-4, 6, 7 *<br>* page 11 lignes 31-34 *<br>* page 12, lignes 3-5, 13-17 *<br>* le document en entier *<br>----- | 1-9 | INV.<br>G06F30/10<br>B29B11/14<br>G06F111/10<br>G06F113/10 |
| A | WO 2022/207774 A1 (TWIKIT NV [BE]) 6 octobre 2022 (2022-10-06)<br>* alinéas [0003], [0006], [0008], [0014], [0016], [0017], [0045], [0060], [0061], [0065], [0066] *<br>* figures 2-4 *<br>* revendications 1, 10 *<br>* le document en entier *<br>----- | 1-9 | |
| X | Anonymous: "Blending between Mesh and DualMesh - Gallery / Grasshopper - McNeel Forum",<br>,<br>31 octobre 2020 (2020-10-31), XP093175219,<br>Extrait de l'Internet:<br>URL:https://discourse.mcneel.com/t/blending-between-mesh-and-dualmesh/110138<br>[extrait le 2024-06-14] | 9 | **DOMAINES TECHNIQUES RECHERCHES (IPC)**<br><br>G06F<br>B29B |
| A | * pages 1 and 2, figures *<br>* le document en entier *<br>-----<br>-/-- | 1-8 | |

Le présent rapport a été établi pour toutes les revendications

| Lieu de la recherche | Date d'achèvement de la recherche | Examinateur |
| --- | --- | --- |
| Munich | 10 avril 2025 | Joris, Pierre |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................................
& : membre de la même famille, document correspondant

EPO FORM 1503 03.82 (P04C02)

page 1 de 2

Europäisches
Patentamt

European
Patent Office

Office européen
des brevets

# RAPPORT DE RECHERCHE EUROPEENNE

Numéro de la demande

EP 24 21 9653

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | Entagma: "Crochet Blending between Delaunay and Voronoi", , 26 décembre 2019 (2019-12-26), XP093175454, Extrait de l'Internet: URL:https://www.youtube.com/watch?v=MwANWf6G9EE [extrait le 2024-06-17] * 0:00-0:50, 5:50-6:10, 13:00-13:30, 15:30-17:30 * * le document en entier * | 1-9 | |
| A | FASCETTI ALESSANDRO ET AL: "Dual random lattice modeling of backward erosion piping", COMPUTERS AND GEOTECHNICS, ELSEVIER, AMSTERDAM, NL, vol. 105, 1 novembre 2018 (2018-11-01), pages 265-276, XP085533839, ISSN: 0266-352X, DOI: 10.1016/J.COMPGEO.2018.08.018 * abrégé * * figures 1, 3, 6 * * section 3.1 * * le document en entier * | 1-9 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| Munich | 10 avril 2025 | Joris, Pierre |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 24 21 9653

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-04-2025

| Document brevet cité au rapport de recherche | Date de publication | Membre(s) de la famille de brevet(s) | Date de publication |
|---|---|---|---|
| WO  2023174953     A1 | 21-09-2023 | EP      4494028 A1 | 22-01-2025 |
|  |  | FR      3133333 A1 | 15-09-2023 |
|  |  | WO   2023174953 A1 | 21-09-2023 |
| WO 2022207774    A1 | 06-10-2022 | CA      3213263 A1 | 06-10-2022 |
|  |  | EP      4068136 A1 | 05-10-2022 |
|  |  | EP      4315145 A1 | 07-02-2024 |
|  |  | US 2024184958 A1 | 06-06-2024 |
|  |  | WO   2022207774 A1 | 06-10-2022 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **CLYNE, D. HULL**. An introduction to composite materials. Cambridge University Press, 2019
- **SONG F** ; **SOH AK** ; **BAI YL**. Structural and mechanical properties of the organic matrix layers of nacre. *Biomaterials*, September 2003, vol. 24 (20), 3623-31
- **T. X. ZHENG**. Ultrastiff Mechanical Metamaterials. *Science*, 20 November 2014, vol. 3434 (6105890), 9621373-965

- **V.S. DESPANDES**. Foam topology: bending versus stretching dominated architectures. *Acta Materialia*, 2001, vol. 49 (6), 1035-1040
- **V.S. DESPANDES**. Effective properties of the octett-truss lattice material. *Journal of the Mechanics and Physics of Solids*, vol. 49, 1747-1769
- **LUBACHEVSKY, BORIS D.** ; **STILLINGER, FRANK H.** Geometric properties of random disk packings. *Journal of Statistical Physics*, 1990, vol. 60 (5-6), 561-583